(19) Europäisches Patentamt
European Patent Office
Office européen des brevets

(11) **EP 3 998 583 A2**

(12) **EUROPEAN PATENT APPLICATION**

(43) Date of publication:
**18.05.2022 Bulletin 2022/20**

(21) Application number: **22159381.7**

(22) Date of filing: **01.03.2022**

(51) International Patent Classification (IPC):
**G06V 10/82** (2022.01)　　**G06V 30/226** (2022.01)
**G06V 30/28** (2022.01)

(52) Cooperative Patent Classification (CPC):
**G06V 30/2268; G06V 10/82; G06V 30/287**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.08.2021 CN 202110945882**

(71) Applicant: **BEIJING BAIDU NETCOM SCIENCE TECHNOLOGY CO., LTD.**
**No.10 Shangdi 10th Street**
**Haidian District**
**Beijing 100085 (CN)**

(72) Inventors:
• **TANG, Licheng**
  **Beijing, 100085 (CN)**
• **LIU, Jiaming**
  **Beijing, 100085 (CN)**

(74) Representative: **Carpmaels & Ransford LLP**
**One Southampton Row**
**London WC1B 5HA (GB)**

(54) **METHOD AND APPARATUS OF TRAINING CYCLE GENERATIVE NETWORKS MODEL, AND METHOD AND APPARATUS OF BUILDING CHARACTER LIBRARY**

(57) A method of training a cycle generative networks model and a method of building a character library are provided, which relate to a field of artificial intelligence, in particular to a computer vision and deep learning technology, and which may be applied to a scene such as image processing and image recognition. A specific implementation scheme includes: inputting a source domain sample character into the cycle generative networks model to obtain a first target domain generated character; calculating a character error loss of the cycle generative networks model by inputting the first target domain generated character into a trained character classification model; calculating a feature loss of the cycle generative networks model by inputting the first target domain generated character and a preset target domain sample character into the character classification model; and adjusting a parameter of the cycle generative networks model according to the character error loss and the feature loss. An apparatus of training a cycle generative networks model, an apparatus of building a character library, an electronic device, and a storage medium are further provided.

FIG. 2

EP 3 998 583 A2

**Description**

TECHNICAL FIELD

The present disclosure relates to a field of an artificial intelligence technology, in particular to a computer vision and deep learning technology, and may be applied to a scene such as image processing and image recognition. More specifically, the present disclosure provides a method and an apparatus of training a cycle generative networks model, a method and an apparatus of building a character library, an electronic device, and a storage medium.

BACKGROUND

With a rapid development of the Internet, people have increasingly high demand for a diversity of image styles. For example, a generation of various style fonts has received extensive research and attention.

SUMMARY

The present disclosure provides a method and an apparatus of training a cycle generative networks model, a method and an apparatus of building a character library, an electronic device, and a storage medium.
According to one aspect, there is provided a method of training a cycle generative networks model, including: inputting a source domain sample character into the cycle generative networks model to obtain a first target domain generated character; calculating a character error loss of the cycle generative networks model by inputting the first target domain generated character into a trained character classification model; calculating a feature loss of the cycle generative networks model by inputting the first target domain generated character and a preset target domain sample character into the character classification model; and adjusting a parameter of the cycle generative networks model according to the character error loss and the feature loss.
According to another aspect, there is provided a method of building a character library, including: inputting a source domain input character into a cycle generative networks model to obtain a target domain new character; and building the character library based on the target domain new character, wherein the cycle generative networks model is trained by the method of training the cycle generative networks model as described above.
According to another aspect, there is provided an apparatus of training a cycle generative networks model, including: a first generation module configured to input a source domain sample character into the cycle generative networks model to obtain a first target domain generated character; a first calculation module configured to calculate a character error loss of the cycle generative networks model by inputting the first target domain generated character into a trained character classification model; a second calculation module configured to calculate a feature loss of the cycle generative networks model by inputting the first target domain generated character and a preset target domain sample character into the character classification model; and a first adjustment module configured to adjust a parameter of the cycle generative networks model according to the character error loss and the feature loss.
According to another aspect, there is provided an apparatus of building a character library, including: a third generation module configured to input a source domain input character into a cycle generative networks model to obtain a target domain new character; and a character library building module configured to build the character library based on the target domain new character, wherein the cycle generative networks model is trained by the apparatus of training the cycle generative networks model as described above.
According to another aspect, there is provided an electronic device, including: at least one processor; and a memory communicatively connected to the at least one processor, wherein the memory stores instructions executable by the at least one processor, and the instructions, when executed by the at least one processor, cause the at least one processor to implement the method provided by the present disclosure.
According to another aspect, there is provided a non-transitory computer-readable storage medium having computer instructions stored thereon, wherein the computer instructions allow a computer to implement the method provided by the present disclosure.
According to another aspect, there is provided an computer program product containing a computer program, wherein the computer program, when executed by a processor, is allowed to implement the method provided by the present disclosure.
It should be understood that content described in this section is not intended to identify key or important features in the embodiments of the present disclosure, nor is it intended to limit the scope of the present disclosure. Other features of the present disclosure will be easily understood through the following description.

BRIEF DESCRIPTION OF THE DRAWINGS

The accompanying drawings are used to understand the solution better and do not constitute a limitation to the present disclosure.

FIG. 1 shows a schematic diagram of an exemplary system architecture in which a method of training a cycle generative networks model and/or a method of building a character library may be applied according to an embodiment of the present disclosure.
FIG. 2 shows a flowchart of a method of training a cycle generative networks model according to an embodiment of the present disclosure.
FIG. 3A shows a schematic diagram of a method of training a cycle generative networks model according to an embodiment of the present disclosure.
FIG. 3B to FIG. 3C show schematic structural diagrams of a cycle generative networks model according to an embodiment of the present disclosure.
FIG. 4A to FIG. 4B show visualization effect diagrams of a feature loss according to an embodiment of the present disclosure.
FIG. 5 shows an effect comparison diagram of using a feature loss according to an embodiment of the present disclosure.
FIG. 6 shows an effect comparison diagram of using a character error loss according to an embodiment of the present disclosure.
FIG. 7 shows an effect diagram of generating a target domain generated character based on a source domain sample character by using a cycle generative networks model according to an embodiment of the present disclosure.
FIG. 8 shows a flowchart of a method of building a character library according to an embodiment of the present disclosure.
FIG. 9 shows a block diagram of an apparatus of training a cycle generative networks model according to an embodiment of the present disclosure.
FIG. 10 shows a block diagram of an apparatus of building a character library according to an embodiment of the present disclosure.
FIG. 11 shows a block diagram of an electronic device for implementing a method of training a cycle generative networks model and/or a method of building a character library according to an embodiment of the present disclosure.

DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

A font generation is an emerging task in a field of image style transfer. The image style transfer is to convert an image into another style while keeping a content unchanged, which is a popular research direction of a deep learning application.

At present, the font generation may be achieved using a GAN (Generative Adversarial Networks) model. However, in a GAN model-based font generation scheme, a network trained with a small amount of data may only be used to learn some relatively weak features such as tilt, size and partial strokes, and a feature with a rich user style may not be learned. Although a network trained with a large amount of data may be used to achieve a strong style, a character error may be generated in a case of a Chinese character outside a training set. These main research results are difficult to achieve an effect of a font level.

The embodiments of the present disclosure proposes a method of training a cycle generative networks model and a method of building a character library using the cycle generative networks model. By achieving the font generation using CycleGAN (Cycle Generative Adversarial Networks, also called Cycle Generative Networks) and introducing a character error loss and a feature loss using a character classification model, an ability of the cycle generative networks model to learn a font feature may be improved, and a character error probability may be reduced.

In the embodiments of the present disclosure, the cycle generative networks model may achieve a style transfer between a source domain and a target domain. The cycle generative networks model may include two generation models and two discrimination models. The two generation models may include GeneratorA2B for converting an image of style A to an image of style B and GeneratorB2A for converting an image of style B to an image of style A. The two discrimination models may include Discriminator A for discriminating whether the converted image is an image of style A and Discriminator B for discriminating whether the converted image is an image of style B.

In a process of training the cycle generative networks model, both generation models have a training goal of generating an image with a target domain style (or source domain style) as far as possible, and both discrimination models have a training goal of distinguishing an image generated by the generation model from a real target domain image (or source domain image) as far as possible. The generation models and the discrimination models may be continuously updated and improved in the training process, so that both generation models may have a stronger ability to achieve the style transfer, and both discrimination models may have a stronger ability to distinguish the generated image from the real image.

It should be noted that in the technical solution of the present disclosure, an acquisition, a storage, a use, a processing, a transmission, a provision, a disclosure and an application of user personal information involved comply with provisions of relevant laws and regulations, take essential confidentiality measures, and do not violate public order and good custom.

In the technical solution of the present disclosure, authorization or consent is obtained from the user before the user's personal information is obtained or collected.

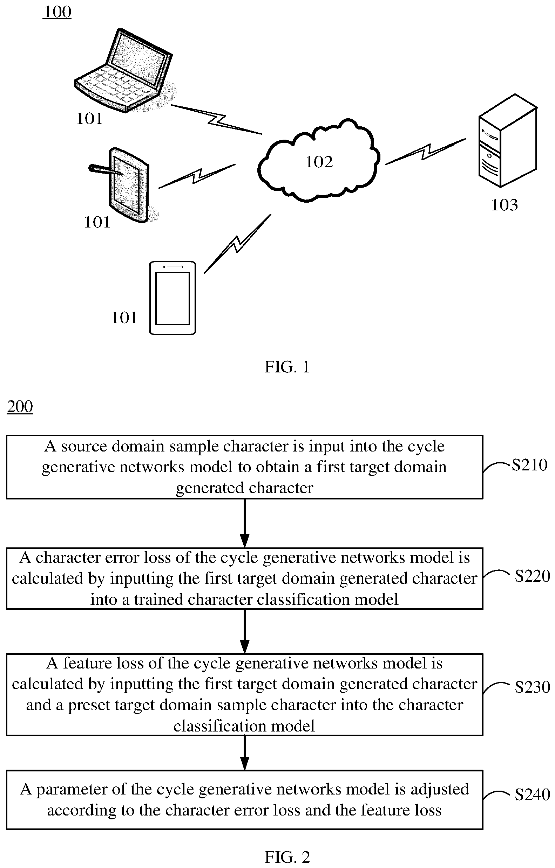

FIG. 1 shows a schematic diagram of an exemplary system architecture in which a method of training a cycle generative networks model and/or a method of building a character library may be applied according to an embodiment of the present disclosure. It should be noted that FIG. 1 is only an example of a system architecture in which the embodiments of the present disclosure may be applied, so as to help those skilled in the art to understand the technical content of the present disclosure. It does not mean that the embodiments of the present disclosure may not be applied to other apparatuses, systems, environments or scenes.

As shown in FIG. 1, a system architecture 100 according to the embodiment may include a plurality of terminal devices 101, a network 102, and a server 103. The network 102 is used to provide a medium for a communication link between the terminal device 101 and the server 103. The network 102 may include various connection types, such as wired or wireless communication links, etc.

A user may use the terminal device 101 to interact with the server 103 through the network 102 so as to receive or transmit a message, etc. The terminal device 101 may be various electronic devices, including but not limited to a smart phone, a tablet computer, a laptop computer, etc.

At least one of the method of training the cycle generative networks model and the method of building the character library provided by the embodiments of the present disclosure may be generally performed by the server 103. Accordingly, an apparatus of training a cycle generative networks model and/or an apparatus of building a character library provided by the embodiments of the present disclosure may be generally arranged in the server 103. The method of training the cycle generative networks model and/or the method of building the character library provided by the embodiments of the present disclosure may also be performed by a server or a server cluster that is different from the server 103 and that may communicate with the terminal device 101 and/or the server 103. Accordingly, the apparatus of training the cycle generative networks model and/or the apparatus of building the character library provided by the embodiments of the present disclosure may also be arranged in a server or a server cluster that is different from the server 103 and that may communicate with the terminal device 101 and/or the server 103.

FIG. 2 shows a flowchart of a method of training a cycle generative networks model according to an embodiment of the present disclosure.

As shown in FIG. 2, a method 200 of training the cycle generative networks model may include operation S210 to operation S240.

In operation S210, a source domain sample character is input into the cycle generative networks model to obtain a first target domain generated character.

For example, the source domain sample character may be an image with a character having font style in a source domain, and the font style in the source domain may be a regular font such as KaiTi, SimSun or SimHei. The first target domain generated character may be an image with a character having font style in a target domain, and the font style in the target domain may be a user handwriting font style or other artistic font styles.

The source domain sample character may be input into the cycle generative networks model, and the cycle generative networks model may output the first target domain generated character. For example, an image containing a KaiTi Chinese character "做" may be input into the cycle generative networks model, and the cycle generative networks model may output an image containing a handwritten Chinese character "做".

In operation S220, a character error loss of the cycle generative networks model is calculated by inputting the first target domain generated character into a trained character classification model.

For example, the trained character classification model may be trained using a VGG19 (Visual Geometry Group 19) network. Training samples for the character classification model may include images containing a variety of fonts. For example, the training samples may include about 450000 images containing more than 6700 characters with more than 80 fonts.

The first target domain generated character may be input into the character classification model, and the character classification model may output a generated character vector $\bar{X}=[x_0, x_1 \ldots\ldots x_i \ldots\ldots x_n]$ for the first target domain generated character. A standard character vector $\bar{Y}=[y_0, y_1 \ldots\ldots y_i \ldots\ldots y_n]$ may be preset for the first target domain generate character. $x_i$ represents an element with subscript i in the generated character vector, $y_i$ represents an element with subscript i in the standard character vector, i is an integer greater than or equal to 0 and less than or equal to n, and n represents the number of elements in the generated character vector $\bar{X}$ and the standard character vector $\bar{Y}$.

A loss may be determined according to a difference between the generated character vector $\bar{X}$ and the standard character vector $\bar{Y}$ for the first target domain generated character. The loss may be called a character error loss, which may be used to constrain a character error rate of the first target domain generated character output by the cycle generative networks model, so as to reduce a character error probability of the cycle generative networks model.

In operation S230, a feature loss of the cycle generative networks model is calculated by inputting the first target domain generated character and a preset target domain sample character into the character classification model.

For example, the first target domain generated character may be an image containing a handwritten Chinese character "做" generated by the cycle generative networks model, and the target domain sample character may be an image of a sample character in the target domain, containing a real handwritten Chinese character "做", which may be an image generated from user's real handwriting. The image generated from user's real handwriting may be acquired from a public data set or with a user authorization.

The character classification model may include a plurality of feature layers (e.g., 90 feature layers). A generated feature map output by each layer may be obtained by inputting the first target domain generated character into the cycle generative networks model. A sample feature map output by each layer may be obtained by inputting the target domain sample character into the cycle generative networks model.

A feature loss of each feature layer may be determined according to a difference between the generated feature map and the sample feature map of the feature layer. In an example, a sum of the feature loss of at least one preset layer (e.g., the 45th layer and the 46th layer) of the plurality of feature layers may be selected as a global feature loss.

The global feature loss may be used for the cycle generative networks model to learn features of the first target domain generated character and the target domain sample character with a large difference, so that the cycle generative networks model may learn more font details, and an ability of the cycle generative networks model to learn a font feature may be improved.

In operation S240, a parameter of the cycle generative networks model is adjusted according to the character error loss and the feature loss.

For example, the parameter of the cycle generative networks model may be adjusted according to a sum of the character error loss and the feature loss, so as to obtain an updated cycle generative networks model. For a next source domain sample character, the process may return to operation S210 to repeatedly train the updated cycle generative networks model until a preset training stop condition is satisfied. Then, an adjustment of the parameter of the generation model may stop, and a trained cycle generative networks model may be obtained. The training stop condition may include convergence of the character error loss and the sum of the feature loss.

The embodiments of the present disclosure may be implemented to achieve the font generation of various styles by generating the target domain generated character based on the source domain sample character using the cycle generative networks model. In addition, by introducing the character error loss and the feature loss using the character classification model, the ability of the cycle generative networks model to learn the font feature may be improved, and the character error probability may be reduced.

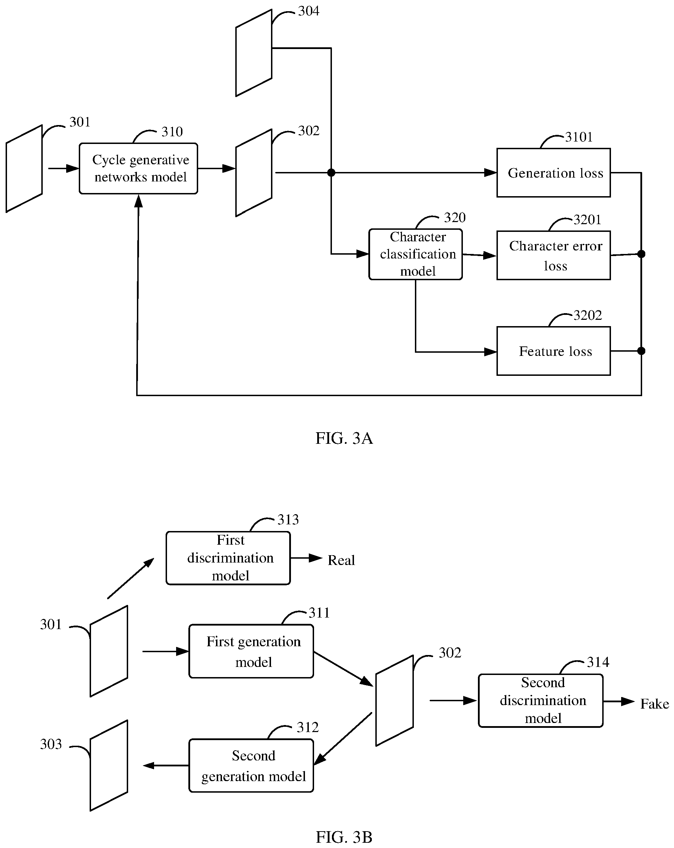

FIG. 3A shows a schematic diagram of a method of training a cycle generative networks model according to an embodiment of the present disclosure.

FIG. 3B to FIG. 3C show schematic structural diagrams of a cycle generative networks model according to an embodiment of the present disclosure.

As shown in FIG. 3A, the schematic diagram contains a cycle generative networks model 310 and a character classification model 320. A source domain sample character 301 may be input into the cycle generative networks model 310 to obtain a first target domain generated character 302. A generation loss 3101 of the cycle generative networks model 310 may be calculated according to the source domain sample character 301, the first target domain generated character 302 and a target domain sample character 304. The first target domain generated character 302 and the target domain sample character 304 may be input into the character classification model 320, and a character error loss 3201 and a feature loss 3202 may be calculated according to an output result of the character classification model 320.

A parameter of the cycle generative networks model 310 may be adjusted according to the generation loss 3101, the character error loss 3201 and the feature loss 3202.

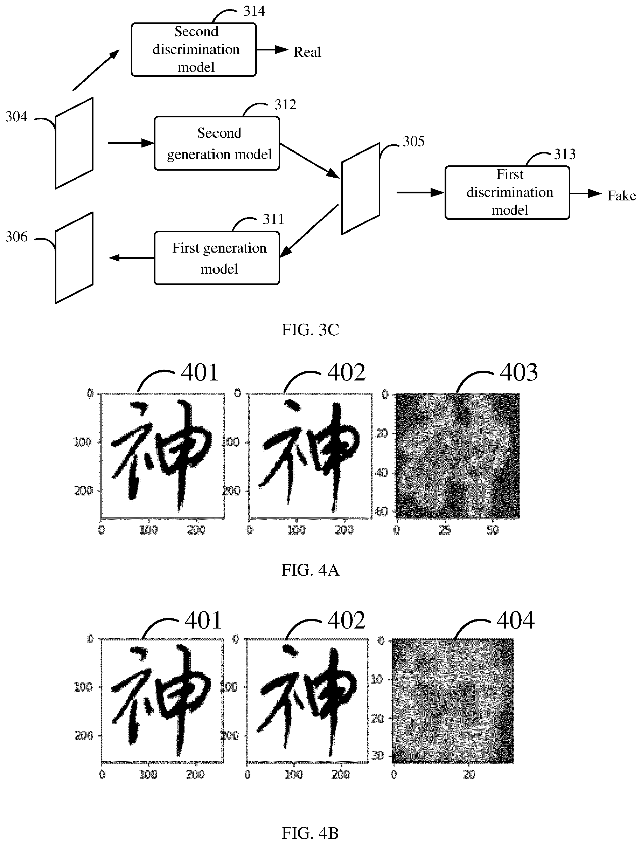

As shown in FIG. 3B and FIG. 3C, the cycle generative networks model 310 includes a first generation model 311, a second generation model 312, a first discrimination model 313, and a second discrimination model 314. The first generation model 311 is used to convert an image of the source domain font style into an image of the target domain font style, and the second generation model 312 is used to convert an image of the target domain font style into an image of the source domain font style. The first discrimination model 313 is used to determine whether the converted image is an image of the source domain font style, and the second discrimination model 314 is used to determine whether the converted image is an image of the target domain font style.

Based on a structure of the cycle generative networks model 310, the cycle generative networks model 310 may contain two cycle operation processes. FIG. 3B shows a first cycle operation process of the cycle generative networks model 310, including inputting the source domain sample character into the first generation model 311 to obtain the first target domain generated character, and inputting the first target domain generated character to the second generation model 312 to obtain a generated character in the first source domain. FIG. 3C shows a second cycle operation process of the cycle generative networks model 310, including inputting the target domain sample character to the second generation model 312 to obtain a generated character in the second source domain, and inputting the second source domain generated character to the first generation model 311 to obtain a generated character in the second target domain. Therefore, the samples for the cycle generative networks model 310 may be unpaired images, and it is not necessary to establish a one-to-one mapping between training data.

A loss of the cycle generative networks model 310 may include the generation loss 3101 and a discrimination loss, which will be described below.

FIG. 3B shows the first cycle operation process of the cycle generative networks model 310, including inputting the source domain sample character 301 (for example, an image containing a KaiTi character, referred to as a KaiTi character image) to the first generation model 311 to obtain the first target domain generated character 302 (for example, an image containing a handwritten character, referred to as a handwritten character image), and inputting the first target domain generated character 302 (the handwritten character image) to the second generation model 312 to obtain the first source domain generated character (the KaiTi character image).

In the first cycle operation process, the source domain sample character 301 is a real KaiTi character image, and the first source domain generated character 303 is a model-generated KaiTi character image, which may be called a fake KaiTi character image. The first target domain generated character 302 is a model-generated handwritten character image, which may be called a fake handwritten character image. In the training process, the source domain sample character 301 may be labeled as Real (for example, with a value of 1), and the first target domain generated character 302 may be labeled as fake (for example, with a value of 0).

The source domain sample character 301 may be input into the first discrimination model 313, and an output of 1 is expected by the first discrimination model 313. If a true output of the first discrimination model 313 is X and a loss of the first discrimination model 313 is calculated using a mean square deviation, then a part of the loss of the first discrimination model 313 may be expressed as $(X - 1)^2$.

The first target domain generated character 302 may be input into the second discrimination model 314, and an output of 0 is expected by the second discrimination model 314. If a true output of the second discrimination model 314 is $Y^*$ (to facilitate distinguishing, a parameter with $*$ may be a parameter related to a model-generated image, and a parameter without $*$ may be a parameter related to a real image) and a loss of the second discrimination model 314 is calculated using the mean square deviation, then a part of the loss of the second discrimination model 314 may be expressed as $(Y^* - 0)^2$.

The first target domain generated character 302 may be input to the second discrimination model 314, and an output of the second discrimination model 314 expected by the first generation model 311 is 1. If a true output of the second discrimination model 314 is $Y^*$ and a loss of the first generation model 311 is calculated using the mean square deviation, then a part of the loss of the first generation model 311 may be expressed as $(Y^* - 1)^2$.

In order to ensure that the first source domain generated character 303 obtained by inputting the source domain sample character 301 into the first generation model 311 only contains a style transfer and the content remains unchanged, a cycle-consistency loss may be added for the first generation model 311. The cycle-consistency loss may be calculated according to a difference between the source domain sample character 301 and the first source domain generated character 303. For example, a subtraction operation may be performed on a pixel value of a pixel in the source domain sample character 301 and a pixel value of a corresponding pixel in the first source domain generated character 303, and an absolute value may be determined to obtain a difference for each pixel. Then, differences for all pixels may be summed to obtain the cycle-consistency loss of the first generation model 311, which may be denoted as $L1_{A2B}$.

Therefore, a part of the loss of the first generation model 311 is $(Y^* - 1)^2$, and the other part of the loss is $L1_{A2B}$. A sum of the two parts of loss is the global loss $L_{A2B}$ of the first generation model 311, which may be expressed by Equation (1).

$$L_{A2B} = (Y^* - 1)^2 + L1_{A2B} \qquad \text{Equation (1)}$$

FIG. 3C shows a second cycle operation process of the cycle generative networks model 310, including inputting the target domain sample character 304 (for example, an image containing a handwritten character, referred to as a handwritten character image) into the second generation model 312 to obtain the second source domain generated character 305 (for example, an image containing a KaiTi character, referred to as a KaiTi character image), and inputting the second source domain generated character 305 (the KaiTi character image) into the first generation model 311 to obtain the second target domain generated character 306 (the handwritten character image).

In the second cycle operation process, the target domain sample character 304 is a real handwritten character image, and the second target domain generated character 306 is a model-generated handwritten character image, which may be called a fake handwritten character image. The second source domain generated character 305 is a model-generated KaiTi character image, which may be called a fake KaiTi character image. In the training process, the target domain sample character 304 may be labeled as Real (for example, with a value of 1), and the second source domain generated character 305 may be labeled as Fake (for example, with a value of 0).

The target domain sample character 304 may be input to the second discrimination model 314, and an output of 1 is expected by the second discrimination model 314. If a true output of the second discrimination model 314 is Y and a loss of the second discrimination model 314 is calculated using the mean square deviation, then a part of the loss of the second discrimination model 314 may be expressed as $(Y - 1)^2$.

The second source domain generated character 305 may be input into the first discrimination model 313, and an output of 0 is expected by the first discrimination model 313. If a true output of the first discrimination model 313 is $X^*$ and a loss of the first discrimination model 313 is calculated using the mean square deviation, then a part of the loss of the first discrimination model 313 may be expressed as $(X^* - 0)^2$.

The second source domain generated character 305 may be input into the first discrimination model 313, and an output of the first discrimination model 313 expected by the second generation model 312 is 1. If a true output of the first discrimination model 313 is $X^*$ and a loss of the second generation model 312 is calculated using the mean square deviation, then a part of the loss of the second generation model 312 may be expressed as $(X^* - 1)^2$.

In order to ensure that the second target domain generated character 306 obtained by inputting the target domain sample character 304 into the second generation model 312 only contains a style transfer and the content remains unchanged, a cycle-consistency loss may be added for the second generation model 312. The cycle-consistency loss may be calculated according to a difference between the target domain sample character 304 and the second target domain generated character 306. For example, a subtraction operation may be performed on a pixel value of each pixel in the target domain sample character 304 and a pixel value of a corresponding pixel in the second target domain generated character 306, and an absolute value may be determined to obtain a difference for each pixel. Then, differences for all pixels may be summed to obtain the cycle-consistency loss of the second generation model 312, which may be denoted as $L1_{B2A}$.

Therefore, a part of the loss of the second generation model 312 is $(X^* - 1)^2$, and the other part of the loss is $L1_{B2A}$. A sum of the two parts of loss is the global loss $L_{B2A}$ of the second generation model 312, which may be expressed by Equation (2).

$$L_{B2A} = (X^* - 1)^2 + L1_{B2A} \qquad \text{Equation (2)}$$

A sum of the global loss $L_{A2B}$ of the first generation model 311 and the global loss $L_{B2A}$ of the second generation model 312 may be used as the generation loss 3101 of the cycle generative networks model 310, which may be expressed by Equation (3).

$$L_G = (Y^* - 1)^2 + L1_{A2B} + (X^* - 1)^2 + L1_{B2A} \qquad \text{Equation (3)}$$

where $L_G$ represents the generation loss 3101 of the cycle generative networks model 310, which may be used to adjust the parameter of the first generation model 311 and the parameter of the second generation model 312.

The discrimination loss of the cycle generative networks model 310 includes a discrimination loss of the first discrimination model 313 and a discrimination loss of the second discrimination model 314.

It may be calculated according to FIG. 3B that a part of the loss of the first discrimination model 313 is $(X - 1)^2$, and it may be calculated according to FIG. 3C that the other part of the loss of the first discrimination model 313 is $(X^* - 0)^2$. A sum of the two parts of loss may be used as the discrimination loss $L_A$ of the first discrimination model 313, which may be expressed by Equation (4).

$$L_A = (X - 1)^2 + (X^* - 0)^2 \qquad \text{Equation (4)}$$

The discrimination loss $L_A$ of the first discrimination model 313 may be used to adjust a parameter of the first discrimination model 313.

Similarly, it may be calculated according to FIG. 3B that a part of the loss of the second discrimination model 314 is $(Y^* - 0)^2$, and it may be calculated according to FIG. 3C that the other part of the loss of the second discrimination model 314 is $(Y - 1)^2$. A sum of the two parts of loss may be used as the discrimination loss $L_B$ of the second discrimination model 314, which may be expressed by Equation (5).

$$L_B = (Y - 1)^2 + (Y^* - 0)^2 \qquad \text{Equation (5)}$$

The discrimination loss $L_B$ of the second discrimination model 314 may be used to adjust a parameter of the second discrimination model 314.

The character error loss 3201 and the feature loss 3202 generated by the character classification model 320 will be described below.

As shown in FIG. 3A, the first target domain generated character 302 is input into the character classification model 320 to obtain a generated character vector $\breve{X}=[x_0, x_1 ...... x_i ...... x_n]$ of the first target domain generated character 302. Each element in the vector $\breve{X}$ may represent a character in the training sample, then n represents the number of characters in the training sample. For example, if the training sample contains 6761 characters, then n may be equal to 6760.

A standard character vector $\breve{Y}=[y_0, y_1 ...... y_i ...... y_n]$ may be preset for the first target domain generated character. Each element in the vector $\breve{Y}$ may represent a character in the training sample, then n represents the number of characters in the training sample. For example, if the training sample contains 6761 characters, then n may be equal to 6760.

The standard character vector $\breve{Y}$ represents a vector desired to be output by the character classification model 320 after the first target domain generated character 302 is input into the character classification model 320. For example, if the first target domain generated character 302 is a Chinese character "做", which is the first of the n characters in the training sample, then the standard character vector for the Chinese character "做" may be expressed as Y=[1, 0,0, ......0].

The character error loss 3201 may be determined according to a cross entropy between the generated character vector $\breve{X}$ and the standard character vector $\breve{Y}$ for the first target domain generated character 302. The character error loss 3201 may be expressed by Equation (6).

$$L_C = -\sum_0^n x_i \, log y_i \qquad \text{Equation (6)}$$

where $L_C$ represents the character error loss 3201, $x_i$ represents an element with subscript i in the generated character vector, $y_i$ represents an element with subscript i in the standard character vector, i is an integer greater than or equal to 0 and less than or equal to n, and n represents the number of elements in the generated character vector and the standard character vector.

According to the embodiments of the present disclosure, the character error loss may be used to constrain a character error rate of the first target domain generated character 302 output by the cycle generative networks model 310, so as to reduce a character error probability of the cycle generative networks model 310.

The character classification model 320 may include a plurality of feature layers (e.g., 90 feature layers). A generated feature map output by each layer may be obtained by inputting the first target domain generated character 302 into the cycle generative networks model 310. A sample feature map output by each layer may be obtained by inputting the target domain sample character 304 into the cycle generative networks model 310.

A pixel loss of each feature layer may be determined according to a pixel difference between the generated feature map output by the feature layer and the sample feature map output by the feature layer. For example, in each feature layer, a subtraction operation may be performed on a pixel value of each pixel in the generated feature map output by the feature layer and a pixel value of a corresponding pixel in the sample feature map output by the feature layer, and an absolute value may be determined to obtain a difference for each pixel. Then, differences for all pixels may be summed to obtain the pixel loss of the feature layer.

A sum of the pixel loss of at least one preset layer (e.g., the 45th layer and the 46th layer) of the plurality of feature layers may be selected as the feature loss 3202.

The feature loss 3202 may be used to adjust the parameter of the first generation model 311 to enable the cycle generative networks model 310 to learn features of the first target domain generated character 302 and the target domain sample character 304 with a large difference, so that the cycle generative networks model 310 may learn more font details, and the ability of the cycle generative networks model to learn the font feature may be improved.

FIG. 4A to FIG. 4B show visualization effect diagrams of a feature loss according to an embodiment of the present disclosure.

As shown in FIG. 4A, the target domain sample character 401 is an image containing a real handwritten Chinese character "神", that is, the Chinese character "神" in the target domain sample character 401 is user's real handwriting. The first target domain generated character 402 is an image containing the handwritten Chinese character "神" generated by the cycle generative networks model. The target domain sample character 401 and the first target domain generated character 402 both have a size of 256*256. The target domain sample character 401 and the first target domain generated character 402 may be input into the character classification model, and a generated feature map and a sample feature map may be output at a first preset layer of the character classification model. Both the generated feature map and the sample feature map have a size of 64*64. After a pixel difference between the two 64*64 images is calculated, a thermal effect map 403 showing a difference between the two images may be obtained. The thermal effect map 403 is also a 64*64 image, in which a darker part indicates a greater difference between the target domain sample character 401 and the first target domain generated character 402. The cycle generative networks model may focus more on learning the feature of the darker part in the thermal effect map 403, so as to improve a feature-learning ability of the cycle generative networks model.

Similarly, as shown in FIG. 4B, the target domain sample character 401 and the first target domain generated character 402 are input into the character classification model, and a generated feature map and a sample feature map may be output at a second preset layer of the character classification model. Both the generated feature map and the sample feature map have a size of 32*32. After a pixel difference between the two 32*32 images is calculated, a thermal effect map 404 showing a difference between the two images may be obtained. The thermal effect map 404 is also a 32*32 image, in which a darker part indicates a greater difference between the target domain sample character 401 and the first target domain generated character 402. The cycle generative networks model may focus more on learning the feature of the darker part in the thermal effect map 404, so as to improve the feature-learning ability of the cycle generative networks model.

It may be understood that the thermal effect map 403 and the thermal effect map 404 may be combined to enable the cycle generative networks model to learn the features of the target domain sample character 401 and the first target domain generated character 402 with a large difference, so as to improve the feature-learning ability of the cycle generative networks model.

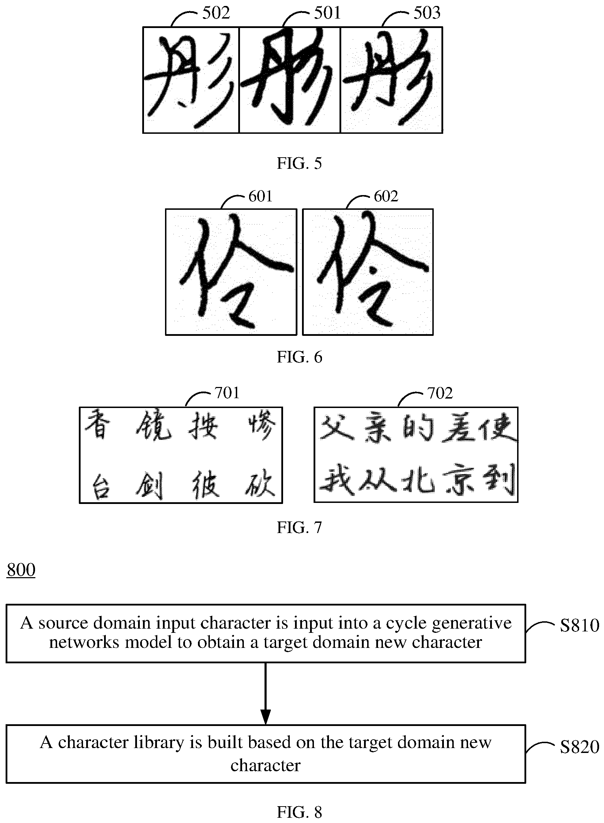

FIG. 5 shows an effect comparison diagram of using a feature loss according to an embodiment of the present disclosure.

As shown in FIG. 5, an image 501 contains a real handwritten Chinese character "彤", that is, the Chinese character "彤" in the image 501 is user's real handwriting. An image 502 is an image containing a handwritten Chinese character "彤" generated without constraining the cycle generative networks model using the feature loss. An image 503 is an image containing a handwritten Chinese character "彤" generated with constraining the cycle generative networks model using the feature loss. Compared with the Chinese character "彤" in the image 502, the Chinese character "彤" in the image 503 contains more features in the user's real handwritten Chinese character "彤" (i.e., the Chinese character "彤" in the image 501), and is more similar to the user's real handwritten Chinese character "彤".

FIG. 6 shows an effect comparison diagram of using a character error loss according to an embodiment of the present disclosure.

As shown in FIG. 6, an image 601 is an image containing a handwritten Chinese character "伶" generated without constraining the cycle generative networks model using the character error loss. An image 602 is an image containing a handwritten Chinese character "伶" generated with constraining the cycle generative networks model using the character error loss. A Chinese character stroke "丶" is missing in the Chinese character "伶" in the image 601, and the Chinese character "伶" in the image 602 is a correct one. Therefore, by constraining the cycle generative networks model using the character error loss, a correct character may be learned, and the character error rate may be reduced.

FIG. 7 shows an effect diagram of generating a target domain generated character based on a source domain sample character using a cycle generative networks model according to an embodiment of the present disclosure.

As shown in FIG. 7, a character in an image 701 is user's read handwriting, a character in an image 702 is generated by the cycle generative networks model, and the character in the image 702 has a font style of the user's real handwriting.

In the embodiments of the present disclosure, the target domain generated character is generated based on the source domain sample character by using the cycle generative networks model, which may achieve various styles of font generation, and the character error loss and the feature loss are introduced using the character classification model, which may improve the ability of the cycle generative networks model to learn the font feature and may further reduce the character error probability.

FIG. 8 shows a flowchart of a method of building a character library according to an embodiment of the present disclosure.

As shown in FIG. 8, a method 800 of building a character library includes operation S810 to operation S820.

In operation S810, a source domain input character is input into a cycle generative networks model to obtain a target domain new character.

The cycle generative networks model is trained according to the method of training the cycle generative networks model.

For example, the source domain input character may be a KaiTi character image, and the new character may be a handwritten character image. The handwritten character image may be obtained by inputting the KaiTi character image into the cycle generative networks model.

In operation S820, a character library is built based on the target domain new character.

For example, the new character generated by the cycle generative networks model may be stored to build a character library with a handwriting font style. The character library may be applied to an input method, and a user may directly acquire a character with a handwriting font style by using the input method based on the character library, so that a diversified need of the user may be satisfied, and a user experience may be improved.

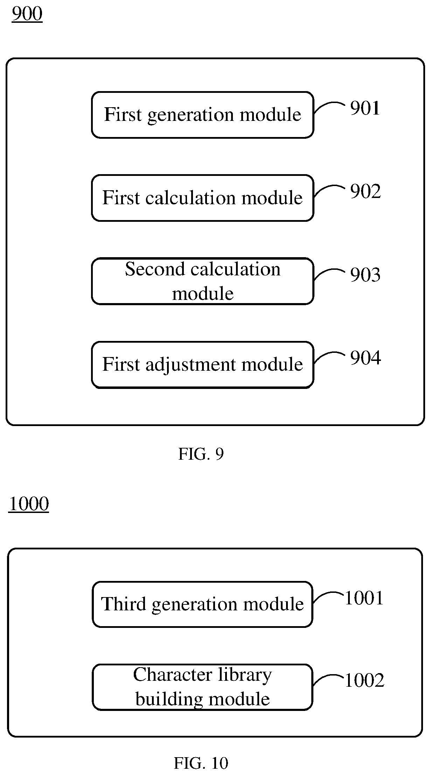

FIG. 9 shows a block diagram of an apparatus of training a cycle generative networks model according to an embodiment of the present disclosure.

As shown in FIG. 9, a cycle generative networks model 900 may include a first generation module 901, a first calculation module 902, a second calculation module 903, and a first adjustment module 904.

The first generation module 901 is used to input a source domain sample character into the cycle generative networks model to obtain a first target domain generated character.

The first calculation module 902 is used to calculate a character error loss of the cycle generative networks model by inputting the first target domain generated character into a trained character classification model.

The second calculation module 903 is used to calculate a feature loss of the cycle generative networks model by inputting the first target domain generated character and a preset target domain sample character into the character classification model.

The first adjustment module 904 is used to adjust a parameter of the cycle generative networks model according to the character error loss and the feature loss.

According to the embodiments of the present disclosure, the first calculation module 902 may include a character vector generation unit and a character error loss calculation unit.

The character vector generation unit is used to input the first target domain generated character into the trained character classification model to obtain a generated character vector for the first target domain generated character.

The character error loss calculation unit is used to calculate the character error loss according to a difference between the generated character vector and a preset standard character vector.

According to the embodiments of the present disclosure, the character error loss calculation unit is used to calculate the character error loss $L_C$ according to an equation of

$$L_C = -\sum_0^n x_i \, log y_i$$

where $L_C$ represents the character error loss, $x_i$ represents an element with subscript i in the generated character vector, $y_i$ represents an element with subscript i in the standard character vector, i is an integer greater than or equal to 0 and less than or equal to n, and n represents the number of elements in the generated character vector and the standard character vector.

According to the embodiments of the present disclosure, the character classification model may include a plurality of feature layers, and the second calculation module 903 may include a first feature map generation unit, a second feature map generation unit and a feature loss calculation unit.

The first feature map generation unit is used to input the first target domain generated character into the character classification model to obtain a generated feature map output by each feature layer of the character classification model.

The second feature map generation unit is used to input the target domain sample character into the character classification model to obtain a sample feature map output by each feature layer of the character classification model.

The feature loss calculation unit is used to calculate the feature loss according to a difference between the generated feature map and the sample feature map of the at least one feature layer.

According to the embodiments of the present disclosure, the feature loss calculation unit may include a pixel loss calculation sub-unit and a feature loss calculation sub-unit.

The pixel loss calculation sub-unit is used to calculate, for each feature layer of the at least one feature layer, a pixel difference between the generated feature map and the sample feature map of the each feature layer, so as to obtain a pixel loss of the each feature layer.

The feature loss calculation sub-unit is used to calculate the feature loss according to the pixel loss of at least one feature layer.

According to the embodiments of the present disclosure, the pixel loss calculation sub-unit is used to calculate, for a pixel at each position in the generated feature map, an absolute value of a difference between a pixel value of the pixel and a pixel value of a pixel at a corresponding position in the sample feature map, so as to obtain a difference for the pixel at each position; and determine the pixel difference between the generated feature map and the sample feature map according to differences for pixels at a plurality of positions.

According to the embodiments of the present disclosure, the cycle generative networks model may include a first generation model and a second generation model, and the first generation module is used to input the source domain sample character into the first generation model to obtain the first target domain generated character and a first source domain generated character. The apparatus may further include: a second generation module used to input the target domain sample character into the second generation model to obtain the second target domain generated character and the second source domain generated character; a third calculation module used to calculate a generation loss of the cycle generative networks model according to the source domain sample character, the first target domain generated character, the first source domain generated character, the target domain sample character, the second target domain generated character and the second source domain generated character; and a second adjustment module used to adjust a parameter of the first generation model according to the generation loss.

According to the embodiments of the present disclosure, the first adjustment module is used to adjust a parameter of the first generation model according to the character error loss and the feature loss.

According to the embodiments of the present disclosure, the source domain sample character is an image with a source domain font style, and the target domain sample character is an image with a target domain font style.

FIG. 10 shows a block diagram of an apparatus of building a character library according to an embodiment of the present disclosure.

As shown in FIG. 10, an apparatus 1000 of building a character library may include a third generation module and a character library building module.

The third generation module is used to input a source domain input character into the cycle generative networks model to obtain a target domain new character.

The character library building module is used to build the character library based on the target domain new character.

The cycle generative networks model is trained by the apparatus of training the cycle generative networks model as described above.

According to the embodiments of the present disclosure, the present disclosure further provides an electronic device, a readable storage medium, and a computer program product.

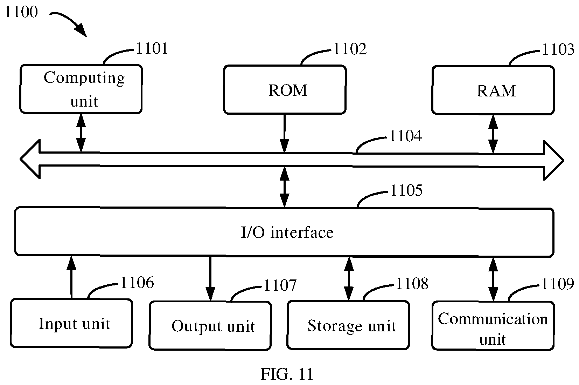

FIG. 11 shows a schematic block diagram of an exemplary electronic device 1100 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 11, the electronic device 1100 may include a computing unit 1101, which may perform various appropriate actions and processing based on a computer program stored in a read-only memory (ROM) 1102 or a computer program loaded from a storage unit 1108 into a random access memory (RAM) 1103. Various programs and data required for the operation of the electronic device 1100 may be stored in the RAM 1103. The computing unit 1101, the ROM 1102 and the RAM 1103 are connected to each other through a bus 1104. An input/output (I/O) interface 1105 is further connected to the bus 1104.

Various components in the electronic device 1100, including an input unit 1106 such as a keyboard, a mouse, etc., an output unit 1107 such as various types of displays, speakers, etc., a storage unit 1108 such as a magnetic disk, an optical disk, etc., and a communication unit 1109 such as a network card, a modem, a wireless communication transceiver, etc., are connected to the I/O interface 1105. The communication unit 1109 allows the electronic device 1100 to exchange information/data with other devices through a computer network such as the Internet and/or various telecommunication networks.

The computing unit 1101 may be various general-purpose and/or special-purpose processing components with processing and computing capabilities. Some examples of the computing unit 1101 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 1101 may perform the various methods and processes described above, such as the method of training the cycle generative networks model and/or the method of building the character library. For example, in some embodiments, the method of training the cycle generative networks model and/or the method of building the character library may be implemented as a computer software program that is tangibly contained on a machine-readable medium, such as the storage unit 1108. In some embodiments, part or all of a computer program may be loaded and/or installed on the electronic device 1100 via the ROM 1102 and/or the communication unit 1109. When the computer program is loaded into the RAM 1103 and executed by the computing unit 1101, one or more steps of the method of training the cycle generative networks model and/or the method of building the character library described above may be performed. Alternatively, in other embodiments, the computing unit 1101 may be configured to perform the method of training the cycle generative networks model and/or the method of building the character library in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a distributed system server, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1.  A method (200) of training a cycle generative networks model (310), comprising:

    inputting (S210) a source domain sample character (301) into the cycle generative networks model (310) to obtain a first target domain generated character (302, 402);
    calculating (S220) a character error loss (3201) of the cycle generative networks model (310) by inputting the first target domain generated character (302, 402) into a trained character classification model (320);
    calculating (S230) a feature loss (3202) of the cycle generative networks model (310) by inputting the first target domain generated character (302, 402) and a preset target domain sample character (304, 401) into the character classification model (320); and
    adjusting (S240) a parameter of the cycle generative networks model (310) according to the character error loss (3201) and the feature loss (3202).

2.  The method according to claim 1, wherein the calculating a character error loss (3201) of the cycle generative networks model (310) by inputting the first target domain generated character (302, 402) into a trained character classification model (320) comprises:

    inputting the first target domain generated character (302, 402) into the trained character classification model (320) to obtain a generated character vector of the first target domain generated character (302, 402); and
    calculating the character error loss (3201) according to a difference between the generated character vector and a preset standard character vector.

3.  The method according to claim 2, wherein the calculating the character error loss (3201) comprises:
    calculating the character error loss $L_C$ according to an equation of

$$L_C = -\sum_0^n x_i \, log y_i$$

    where $L_C$ represents the character error loss (3201), $x_i$ represents the generated character vector, $y_i$ represents the standard character vector, i is an integer greater than or equal to 0 and less than or equal to n, and n represents a number of elements in the generated character vector and the standard character vector.

4.  The method according to any preceding claim, wherein the character classification model (320) comprises a plurality of feature layers, and the calculating a feature loss (3202) of the cycle generative networks model (310) by inputting the first target domain generated character (302, 402) and a preset target domain sample character (304, 401) into the character classification model (320) comprises:

    inputting the first target domain generated character (302, 402) into the character classification model (320) to obtain a generated feature map output by each feature layer of the character classification model (320);
    inputting the target domain sample character (304, 401) into the character classification model (320) to obtain a sample feature map output by each feature layer of the character classification model (320); and
    calculating the feature loss (3202) according to a difference between the generated feature map and the sample feature map of at least one feature layer.

5. The method according to claim 4, wherein the calculating the feature loss (3202) comprises:

calculating, for each feature layer of the at least one feature layer, a pixel difference between the generated feature map and the sample feature map of the each feature layer, so as to obtain a pixel loss of the each feature layer; and
calculating the feature loss (3202) according to the pixel loss of the at least one feature layer.

6. The method according to claim 5, wherein the calculating a pixel difference between the generated feature map and the sample feature map of the each feature layer comprises:

calculating, for a pixel at each position in the generated feature map, an absolute value of a difference between a pixel value of the pixel and a pixel value of a pixel at a corresponding position in the sample feature map, so as to obtain a difference for the pixel at each position; and
determining the pixel difference between the generated feature map and the sample feature map according to differences for pixels at a plurality of positions.

7. The method according to any preceding claim, wherein the cycle generative networks model (310) comprises a first generation model (311) and a second generation model (312), and the inputting a source domain sample character (301) into the cycle generative networks model (310) to obtain a first target domain generated character (302, 402) comprises:

inputting the source domain sample character (301) into the first generation model (311) to obtain the first target domain generated character (302, 402) and a first source domain generated character (303); and
wherein the method further comprises:

inputting the target domain sample character (304, 401) into the second generation model (312) to obtain a second target domain generated character (306) and a second source domain generated character (305);
calculating a generation loss (3101) of the cycle generative networks model (310) according to the source domain sample character (301), the first target domain generated character (302, 402), the first source domain generated character (303), the target domain sample character (304, 401), the second target domain generated character (306) and the second source domain generated character (305); and
adjusting a parameter of the first generation model (311) according to the generation loss (3101).

8. The method according to claim 7, wherein the adjusting a parameter of the cycle generative networks model (310) according to the character error loss (3201) and the feature loss (3202) comprises:
adjusting the parameter of the first generation model (311) according to the character error loss (3201) and the feature loss (3202).

9. The method according to any preceding claim, wherein the source domain sample character (301) is an image with a source domain font style, and the target domain sample character (304, 401) is an image with a target domain font style.

10. A method (800) of building a character library, comprising:

inputting (S810) a source domain input character into a cycle generative networks model to obtain a target domain new character; and
building (S820) the character library based on the target domain new character,
wherein the cycle generative networks model is trained by the method of any preceding claim.

11. An apparatus (900) of training a cycle generative networks model, comprising:

a first generation module (901) configured to input a source domain sample character into the cycle generative networks model to obtain a first target domain generated character;
a first calculation module (902) configured to calculate a character error loss of the cycle generative networks model by inputting the first target domain generated character into a trained character classification model;
a second calculation module (903) configured to calculate a feature loss of the cycle generative networks model by inputting the first target domain generated character and a preset target domain sample character into the character classification model; and

a first adjustment module (904) configured to adjust a parameter of the cycle generative networks model according to the character error loss and the feature loss.

12. An apparatus (1000) of building a character library, comprising:

a third generation module (1001) configured to input a source domain input character into a cycle generative networks model to obtain a target domain new character; and
a character library building module (1002) configured to build the character library based on the target domain new character, wherein the cycle generative networks model is trained by the apparatus of claim 11.

13. An electronic device (1100), comprising:

at least one processor; and
a memory communicatively connected to the at least one processor, wherein the memory stores instructions executable by the at least one processor, and the instructions, when executed by the at least one processor, cause the at least one processor to implement the method of any one of claims 1 to 10.

14. A non-transitory computer-readable storage medium having computer instructions stored thereon, wherein the computer instructions allow a computer to implement the method of any one of claims 1 to 10.

15. A computer program product containing a computer program, wherein the computer program, when executed by a processor, is allowed to implement the method of any one of claims 1 to 10.

100

FIG. 1

200

| A source domain sample character is input into the cycle generative networks model to obtain a first target domain generated character | S210 |

| A character error loss of the cycle generative networks model is calculated by inputting the first target domain generated character into a trained character classification model | S220 |

| A feature loss of the cycle generative networks model is calculated by inputting the first target domain generated character and a preset target domain sample character into the character classification model | S230 |

| A parameter of the cycle generative networks model is adjusted according to the character error loss and the feature loss | S240 |

FIG. 2

304

301

Cycle generative
networks model
310

302

3101
Generation loss

320
Character
classification
model

3201
Character error
loss

3202
Feature loss

FIG. 3A

313
First
discrimination
model → Real

301

311
First generation
model

302

314
Second
discrimination
model → Fake

312
Second
generation model

303

FIG. 3B

FIG. 3C

FIG. 4A

FIG. 4B

FIG. 5

FIG. 6

FIG. 7

800

| A source domain input character is input into a cycle generative networks model to obtain a target domain new character | ~ S810 |

↓

| A character library is built based on the target domain new character | ~ S820 |

FIG. 8

900

First generation module ⌐ 901

First calculation module ⌐ 902

Second calculation module ⌐ 903

First adjustment module ⌐ 904

FIG. 9

1000

Third generation module ⌐ 1001

Character library building module ⌐ 1002

FIG. 10

1100

1101 Computing unit

1102 ROM

1103 RAM

1104

1105 I/O interface

1106 Input unit

1107 Output unit

1108 Storage unit

1109 Communication unit

FIG. 11